# EUROPEAN PATENT APPLICATION

(11) **EP 4 733 113 A1**
(43) Date of publication of application: **29.04.2026**
(21) Application number: 25211007.7
(22) Date of filing: 24.10.2025
(51) Int. Cl.: B60K 35/00, B60K 35/21, B60K 35/22, B60K 35/23, B60K 35/235, B60K 35/28, B60K 35/81, B60R 1/00, G02B 27/01

(54) **METHOD, SYSTEM, APPARATUS, ELECTRONIC DEVICE, AND STORAGE MEDIUM FOR DISPLAYING IN-VEHICLE INFORMATION**

(30) Priority: 24.10.2024 CN 202411495877
(71) Applicant: AUMOVIO Germany GmbH, 60488 Frankfurt am Main (DE)
(72) Inventor: Lu, Tao, Wuhu, Anhui Province, 241009 (CN); Wang, Yifei, Wuhu, Anhui Province, 241009 (CN); Shi, Haodong, Wuhu, Anhui Province, 241009 (CN); Shi, Hao, Wuhu, Anhui Province, 241009 (CN)
(74) Representative: Aumovio Corporation

(57) **Abstract**

The present disclosure provides a method, a system, an apparatus, an electronic device, and a storage medium for displaying in-vehicle information. A specific implementation solution includes: determining, according to a state of a vehicle, first information that needs to be displayed on a mixed reality device worn by a user in the vehicle; determining, according to the user's head posture and gaze, a target viewing zone that the user is gazing at in a field of view of the corresponding mixed reality device; determining, according to the target viewing zone, second information that needs to be displayed on the mixed reality device; determining a display method of the first information according to the target viewing zone; and realizing, according to the first information, the display method of the first information, and the second information, display of in-vehicle information of the vehicle on the mixed reality device. According to the solution of the present disclosure, it can be ensured that the in-vehicle information is always displayed in front of the user's eyes, thereby avoiding driving hazards caused by defocusing of the user's gaze, and improving driving concentration and reaction time of the user.

## Description

### Technical Field

The present disclosure relates to the field of vehicle technologies, and in particular to a method, a system, an apparatus, an electronic device, and a storage medium for displaying in-vehicle information.

### Background

Currently, in-vehicle information is mainly displayed through in-vehicle displays or heads-up display devices. Both display methods have their own limitations. The in-vehicle display requires a driver to defocus his/her gaze from direct ahead of the vehicle to the in-vehicle display, which introduces risks to driving. The heads-up display device can prevent a driver from gaze defocus, but has drawbacks such as a small display region, high cost, and vulnerability of optical components to damage.

### Summary of the Invention

The present disclosure provides a method, a system, an apparatus, an electronic device, and a storage medium for displaying in-vehicle information, to solve or alleviate one or more technical problems in the related art.

In one aspect, the present disclosure provides a method for displaying in-vehicle information, including:
determining, according to a state of a vehicle, first information that needs to be displayed on a mixed reality device worn by a user in the vehicle;
determining, according to the user's head posture and gaze, a target viewing zone that the user is gazing at in a field of view of the corresponding mixed reality device;
determining, according to the target viewing zone, second information that needs to be displayed on the mixed reality device;
determining a display method of the first information according to the target viewing zone; and
realizing, according to the first information, the display method of the first information, and the second information, display of in-vehicle information of the vehicle on the mixed reality device.

In another aspect, the present disclosure provides a system for displaying in-vehicle information, including:
an image acquisition apparatus configured to acquire environment information corresponding to a vehicle;
a data acquisition apparatus configured to acquire vehicle information corresponding to the vehicle;
a controller electrically connected to the image acquisition apparatus and the data acquisition apparatus and configured to perform the method according to any one of embodiments in the present disclosure; and
a mixed reality device electrically connected to the controller and configured to display in-vehicle information of the vehicle.

In another aspect, the present disclosure provides an apparatus for displaying in-vehicle information, including:
a first determination module configured to determine, according to a state of a vehicle, first information that needs to be displayed on a mixed reality device worn by a user in the vehicle;
a second determination module configured to determine, according to the user's head posture and gaze, a target viewing zone that the user is gazing at in a field of view of the corresponding mixed reality device;
a third determination module configured to determine, according to the target viewing zone, second information that needs to be displayed on the mixed reality device;
a fourth determination module configured to determine a display method of the first information according to the target viewing zone; and
a display module configured to realize, according to the first information, the display method of the first information, and the second information, display of in-vehicle information of the vehicle on the mixed reality device.

In another aspect, the present disclosure provides an electronic device, including:
at least one processor; and
a memory communicatively connected to the at least one processor. Here,
the memory stores instructions executable by the at least one processor, and the instructions, when executed by the at least one processor, enable the at least one processor to perform the method according to any one of embodiments in the present disclosure.

In another aspect, the present disclosure provides a non-transitory computer-readable storage medium storing computer instructions, where the computer instructions are used to cause the computer to perform the method according to any one of embodiments in the present disclosure.

In another aspect, the present disclosure provides a computer program product including a computer program, where the computer program, when executed by a processor, implements the method according to any one of embodiments in the present disclosure.

According to the solution of the present disclosure, it can be ensured that the in-vehicle information is always displayed in front of the user's eyes, thereby avoiding driving hazards caused by defocusing of the user's gaze, and improving driving concentration and reaction time of the user.

It should be understood that the content described in is section is neither intended to identify key or essential features of the embodiments of the present disclosure, nor intended to limit the scope of the present disclosure. Other features of the present disclosure will become readily understood from the following description.

### Brief Description of the Drawings

In accompanying drawings, unless otherwise specified, the same reference numerals refer to the same or similar parts or elements throughout a plurality of drawings. These drawings are not necessarily drawn to scale. It should be understood that these drawings depict only some of the embodiments provided in accordance with the present disclosure and are not to be considered limiting of the scope of the present disclosure.
FIG. 1 is a schematic flow chart of a method for displaying in-vehicle information according to an embodiment of the present disclosure.
FIG. 2 is a schematic application diagram of a method for displaying in-vehicle information according to an embodiment of the present disclosure.
FIG. 3 is a schematic application diagram of a method for displaying in-vehicle information according to an embodiment of the present disclosure.
FIG. 4 is a schematic application diagram of a method for displaying in-vehicle information according to an embodiment of the present disclosure.
FIG. 5 is a schematic application diagram of a method for displaying in-vehicle information according to an embodiment of the present disclosure.
FIG. 6 is a schematic application diagram of a method for displaying in-vehicle information according to an embodiment of the present disclosure.
FIG. 7 is a schematic application diagram of a method for displaying in-vehicle information according to an embodiment of the present disclosure.
FIG. 8 is a schematic application diagram of a method for displaying in-vehicle information according to an embodiment of the present disclosure.
FIG. 9 is a schematic diagram of a system for displaying in-vehicle information according to an embodiment of the present disclosure.
FIG. 10 is a schematic diagram of an apparatus for displaying in-vehicle information according to an embodiment of the present disclosure.
FIG. 11 is a block diagram of an electronic device used to implement display of in-vehicle information according to an embodiment of the present disclosure.

### Detailed Description

The present disclosure will be described in further detail below with reference to the accompanying drawings. The same or similar reference numerals in the drawings represent elements having the same or similar functions. While the various aspects of the embodiments are presented in drawings, the drawings are not necessarily drawn to scale unless specifically indicated.

Furthermore, in order to better illustrate the present disclosure, numerous specific details are given in the following detailed description. It should be understood by those skilled in the art that the present disclosure can be implemented without certain of the specific details. In some instances, methods, means, elements, circuits, and the like well known to those skilled in the art are not described in detail in order to highlight the main points of the present disclosure.

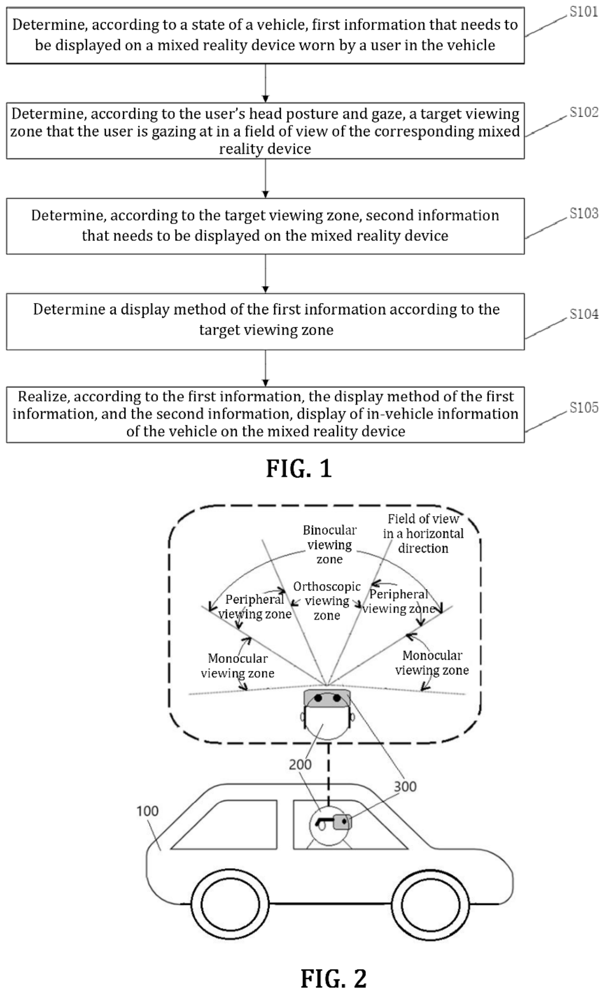

As shown in FIG. 1, an embodiment of the present disclosure provides a method for displaying in-vehicle information, including:
Step S101: Determine, according to a state of a vehicle, first information that needs to be displayed on a mixed reality (MR) device worn by a user in the vehicle;
Step S102: Determine, according to the user's head posture and gaze, a target viewing zone that the user is gazing at in a field of view of the corresponding mixed reality device;
Step S103: Determine, according to the target viewing zone, second information that needs to be displayed on the mixed reality device;
Step S104: Determine a display method of the first information according to the target viewing zone; and
Step S105: Realize, according to the first information, the display method of the first information, and the second information, display of in-vehicle information of the vehicle on the mixed reality device.

According to the embodiment of the present disclosure, it should be noted that:
The state of the vehicle may at least include a driving state of the vehicle and an activation state of the vehicle. The activation state of the vehicle can be understood as either a starting state of the vehicle or a state where the vehicle is activated but remains parked.

The user in the vehicle can be understood as a driver or a passenger. When the driver wears a mixed reality device, safe driving without gaze defocus can be achieved by using the method according to any embodiment of the present disclosure. When the passenger wears a mixed reality device, the same driving perspective as the driver can be obtained by using the method according to any embodiment of the present disclosure, thereby assisting the driver in driving safely and reminding the driver of possible dangerous situations at any time.

The user's head posture and gaze can be determined based on the mixed reality device worn by the user, or determined based on performing image acquisition and recognition on the head and face of the user by a camera built in the vehicle.

The field of view can be understood as a field of view (FOV) in a horizontal direction. As shown in FIG. 2, when a user 200 in a vehicle 100 wears a mixed reality device 300, a field of view in the horizontal direction corresponding to the mixed reality device 300 is divided into a plurality of viewing zones. The upper half of FIG. 2 shows a top view of the head of the user and the plurality of viewing zones obtained by dividing the field of view in the horizontal direction based on the top view. The plurality of viewing zones include a binocular viewing zone and monocular viewing zones. When the user's gaze is in an orthoscopic viewing zone in the binocular viewing zone, it indicates that the user is gazing straight ahead. When the user's gaze is in a peripheral viewing zone in the binocular viewing zone, it indicates that the user is paying attention to an exterior rearview mirror or an A-pillar region. When the user's gaze is in the monocular viewing zone, it indicates that the user is paying attention to the B-pillar or a region between the B-pillar and the C-pillar. When the user's gaze is in the binocular viewing zone, it indicates that the user is driving safely. When the user's gaze is in the monocular viewing zone, it indicates that the user is not paying attention to the environment in front of the vehicle and is in a dangerous driving state.

The target viewing zone can be understood as any viewing zone among the plurality of viewing zones divided in FIG. 2.

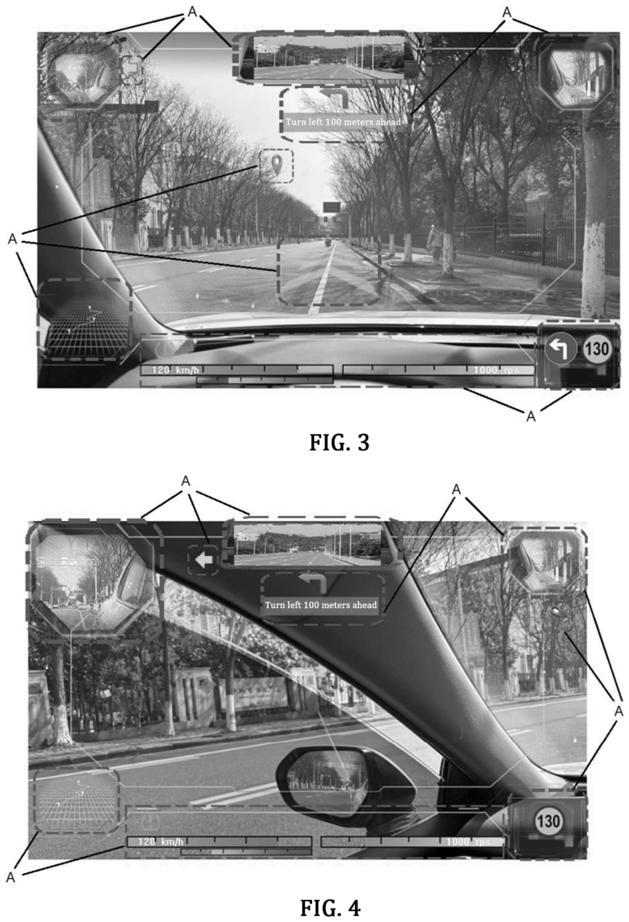

The first information can be understood as information that the user needs to pay regular attention to during vehicle driving, that is, information that is displayed for a long time. The first information includes but is not limited to exterior environment information displayed by exterior rearview mirrors and an interior rearview mirror, vehicle speed information, battery level information, fuel level information, navigation information (a navigation arrow and a destination buoy), road information, turn signal indicator information, and the like (as shown in red dotted boxes A in FIG. 3 to FIG. 8). For example, the red dotted box A in the upper left corner of each figure shows exterior environment information on the side and side-rear of the vehicle displayed by a left exterior rearview mirror. The upper right corner of each figure shows exterior environment information on the side and side-rear of the vehicle displayed by a right exterior rearview mirror. The top middle of each figure shows exterior environment information behind the vehicle displayed by an interior rearview mirror. The bottom middle of each figure shows the vehicle speed information, fuel level information, battery level information, and the like. The first information shown in the lower left corner, lower right corner, and middle of each view is navigation information, road information, and the like. It should be noted that the views are only used for illustration, and the content and position of the first information displayed specifically can be selected and adjusted as needed, and are not limited to those shown in the views.

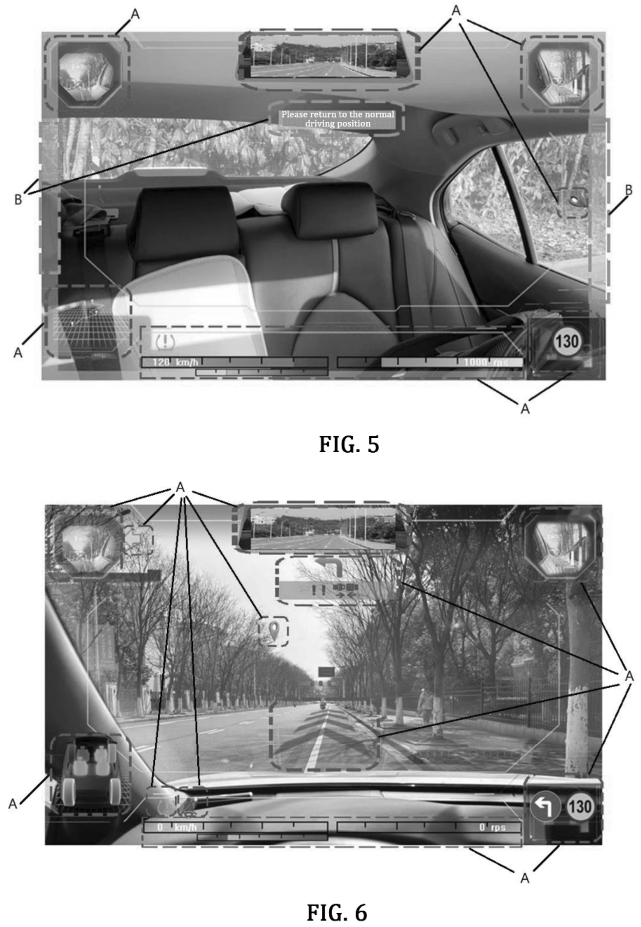

When the vehicle is in different states, the first information displayed to the user by the mixed reality device may be different, depending on in-vehicle information of concern when the vehicle is driving and when the vehicle is activated. For example, FIG. 3 shows the first information displayed by the mixed reality device when the vehicle is driving, and the first information includes exterior environment information. FIG. 6 shows the first information displayed by the mixed reality device when the vehicle is activated, and the first information includes interior environment information (shown in the red dotted box A in the lower right corner of FIG. 6) and exterior environment information.

The mixed reality device can display a plurality of pieces of first information at the same time, and there is no limit on the quantity of pieces of first information.

The display method of the first information can be understood as magnified display, reduced display, blinking display, display position, and the like of the first information. The display method of the first information is set to highlight the first information that requires the user's focused attention when the user's gaze is directed at different viewing zones. It should be noted that each piece of first information may include a regular display method and a special display method. The regular display method can be understood as a default display position and display size of the first information set in the mixed reality device. The special display method can be understood as a non-default display position and/or display size of the first information set in the mixed reality device. For example, the content (first information) displayed by the left exterior rearview mirror shown in the upper left corner of FIG. 3 is displayed by a regular display method. The content (first information) displayed by the left exterior rearview mirror shown in the upper left corner of FIG. 4 is displayed by a special display method, that is, the content displayed by the left exterior rearview mirror is magnified. FIG. 3 shows the content displayed on the mixed reality device when the user is driving with his/her eyes looking forward, and FIG. 4 shows the content displayed on the mixed reality device when the user changes his/her gaze from looking forward to the peripheral viewing zone of the binocular viewing zone, so that the user can view the exterior environment displayed by the left exterior rearview mirror.

When the first information includes the content displayed by the rearview mirror, the first information may be information acquired by the electronic rearview mirror, or information acquired by an additional image acquisition apparatus arranged at the rearview mirror, which is not specifically limited here.

The second information can be understood as information that is not frequently displayed during vehicle driving, that is, information that is displayed for a short period of time. The second information includes but is not limited to warning information, prompt information, and the like. The second information may be a text, a static icon, or a dynamic icon.

According to the technology of the embodiment of the present disclosure, the first information that the user is concerned about during driving (such as the exterior environment information, vehicle speed information, battery level information, fuel level information, navigation information, and road information) can always be displayed in front of the user. This eliminates the need for the user to turn his/her head or shift his/her gaze additionally to check the left rearview mirror or in-vehicle displays arranged at different positions, solving the problem of defocusing of the user's gaze (i.e., the gaze being within the binocular viewing zone) and the driving risks caused by such gaze defocus, and improving the user's driving concentration and reaction time. At the same time, the mixed reality device has stronger human-computer interactivity and display customization, which can provide the vehicle user with more required personalized information, thereby improving user driving safety and user experience.

In one implementation, an embodiment of the present disclosure provides a method for displaying in-vehicle information, including step S101 to step S105. Step S101 of determining, according to the state of the vehicle, the first information that needs to be displayed on the mixed reality device worn by the user in the vehicle includes:
Step S1011: Obtain, according to the state of the vehicle, environment information corresponding to the vehicle based on an image acquisition device.
Step S1012: Obtain, according to the state, vehicle information corresponding to the vehicle based on a data acquisition device, where the vehicle information includes at least one of driving information, road information, navigation information, and multimedia information.
Step S1013: Determine the environment information and the vehicle information as the first information that needs to be displayed on the mixed reality device worn by the user in the vehicle.

According to the embodiment of the present disclosure, it should be noted that:
The image acquisition device may be a camera or sensor arranged on the vehicle.

The environment information includes exterior environment information of the vehicle and/or interior environment information of the vehicle.

The state of the vehicle includes a driving state and an activation state.

According to the technology of the embodiment of the present disclosure, different first information can be displayed on the mixed reality device for the user based on the different states of the vehicle, so as to meet information attention requirements of the user when the vehicle is in different states.

In one implementation, an embodiment of the present disclosure provides a method for displaying in-vehicle information, including step S101 to step S105 and step S1011 to step S1013. Step S1011 of obtaining, according to the state of the vehicle, the environment information corresponding to the vehicle based on the image acquisition device includes:
obtaining exterior environment information of the vehicle based on a first image acquisition device of the vehicle when it is determined that the vehicle is in a driving state.

The exterior environment information includes at least one of front environment information, side-rear environment information, and rear environment information of the vehicle.

According to the embodiment of the present disclosure, it should be noted that:
As shown in FIG. 3, FIG. 4, FIG. 5, FIG. 7, and FIG. 8, it can be understood as the in-vehicle information displayed on the mixed reality device when the vehicle is in the driving state. Here, the red dotted box A in the upper left corner of each figure shows exterior environment information on the side and side-rear of the vehicle displayed by the left exterior rearview mirror. The upper right corner of each figure shows exterior environment information on the side and side-rear of the vehicle displayed by the right exterior rearview mirror. The top middle of each figure shows exterior environment information behind the vehicle displayed by the interior rearview mirror.

According to the technology of the embodiment of the present disclosure, all exterior environment information that the user is concerned about can be displayed on the mixed reality device. This eliminates the need for the user to turn his/her head or shift his/her gaze additionally to check the left rearview mirror or in-vehicle displays arranged at different positions, solving the problem of defocusing of the user's gaze and the driving risks caused by such gaze defocus, and improving the user's driving concentration and reaction time.

In one implementation, an embodiment of the present disclosure provides a method for displaying in-vehicle information, including step S101 to step S105 and step S1011 to step S1013. Step S1011 of obtaining, according to the state of the vehicle, the environment information corresponding to the vehicle based on the image acquisition device includes:
obtaining interior environment information of the vehicle and exterior environment information of the vehicle based on a second image acquisition device of the vehicle when it is determined that the vehicle is in an activation state.

The exterior environment information includes at least one of front environment information, side-rear environment information, and rear environment information of the vehicle.

According to the embodiment of the present disclosure, it should be noted that:
The interior environment information is used to remind the user whether the occupants in the vehicle are wearing seat belts. The interior environment information may be text information or graphic information.

According to the technology of the embodiment of the present disclosure, by displaying the interior environment information, the user can be effectively reminded whether the occupants in the vehicle are wearing seat belts, preventing the occupants from forgetting to wear seat belts or not wearing seat belts, thereby improving driving safety. Meanwhile, all exterior environment information and interior environment information that the user is concerned about can be displayed on the mixed reality device. This eliminates the need for the user to turn his/her head or shift his/her gaze additionally to check the left rearview mirror or in-vehicle displays arranged at different positions, solving the problem of defocusing of the user's gaze and the driving risks caused by such gaze defocus, and improving the user's driving concentration and reaction time.

In one implementation, an embodiment of the present disclosure provides a method for displaying in-vehicle information, including step S101 to step S105. Step S103 of determining, according to the target viewing zone, the second information that needs to be displayed on the mixed reality device includes:
generating warning information when it is determined that the target viewing zone is a monocular viewing zone outside a binocular viewing zone in the field of view, where the warning information is used to prompt the user to gaze at the binocular viewing zone, and the warning information includes text information and/or icon information; and
determining the warning information as the second information that needs to be displayed on the mixed reality device.

According to the embodiment of the present disclosure, it should be noted that:
As shown in FIG. 5, information shown in a green dotted box B in the figure is the second information, and the second information may be text information and/or icon information. When the user's gaze is not focused on the binocular viewing zone, the user is prompted to immediately adjust the gaze to focus on the binocular viewing zone.

When it is determined that the target viewing zone is within the binocular viewing zone, it is determined that the second information that needs to be displayed on the mixed reality device is none.

According to the technology of the embodiment of the present disclosure, by displaying the second information in the mixed reality device, driving safety can be improved and the user can be warned in real time.

In one implementation, an embodiment of the present disclosure provides a method for displaying in-vehicle information, including step S101 to step S105. Step S104 of determining the display method of the first information according to the target viewing zone includes:
determining, when it is determined that the target viewing zone is a peripheral viewing zone within a binocular viewing zone in the field of view, target information corresponding to the peripheral viewing zone, where the first information includes the target information, and the target information includes environment information displayed by an exterior rearview mirror on the same side as the peripheral viewing zone; and
determining the display method of the first information according to the peripheral viewing zone.

According to the embodiment of the present disclosure, it should be noted that:
The display method of the first information can be understood as magnified display, reduced display, blinking display, display position, and the like of the first information. The display method of the first information is set to highlight the first information that requires the user's focused attention when the user's gaze is directed at different viewing zones. It should be noted that each piece of first information may include a regular display method and a special display method. The regular display method can be understood as a default display position and display size of the first information set in the mixed reality device. The special display method can be understood as a non-default display position and/or display size of the first information set in the mixed reality device. For example, the content (first information) displayed by the left exterior rearview mirror shown in the upper left corner of FIG. 3 is displayed by a regular display method. The content (first information) displayed by the left exterior rearview mirror shown in the upper left corner of FIG. 4 is displayed by a special display method, that is, the content displayed by the left exterior rearview mirror is magnified. FIG. 3 shows the content displayed on the mixed reality device when the user is driving with his/her eyes looking forward, and FIG. 4 shows the content displayed on the mixed reality device when the user changes his/her gaze from looking forward to the peripheral viewing zone of the binocular viewing zone, so that the user can view the exterior environment displayed by the left exterior rearview mirror.

According to the technology of the embodiment of the present disclosure, the first information that the user intends to pay attention to during the current driving process can be inferred based on the user's current gaze and head posture, and the first information can be highlighted on the mixed reality device, so that the user can use the mixed reality device to see the required information without defocusing the gaze.

In one implementation, an embodiment of the present disclosure provides a method for displaying in-vehicle information, including step S101 to step S105. Step S105 of realizing, according to the first information, the display method of the first information, and the second information, the display of the in-vehicle information of the vehicle on the mixed reality device includes:
determining, according to sitting posture information of the user, a field of view reference point of the mixed reality device corresponding to the user; and
realizing, according to the first information, the display method of the first information, and the second information, display of in-vehicle information of the vehicle on the mixed reality device based on the field of view reference point.

According to the embodiment of the present disclosure, it should be noted that:
The sitting posture information includes at least height information of the user's head.

According to the technology of the embodiment of the present disclosure, the display positions of the first information and the second information on the mixed reality device can be adaptively adjusted for users of different heights, ensuring that the first information and the second information can be accurately superimposed and mixed with the road environment ahead seen by the naked eyes of the users of different heights on the mixed reality device, and avoiding the first information and the second information from being superimposed and mixed and displayed in wrong positions in the road environment ahead.

In one example, the process of determining the field of view reference point includes: tracking a gaze position of the driver by a camera inside the vehicle, so as to display different UI interfaces when the driver observes different positions. The camera is installed in a direction of a steering wheel. Based on the camera installation position, an optical center thereof is taken as the origin, an X-axis points in an observation direction of the camera, and a Y-axis is parallel to an image plane and points to a right side of the camera, thereby constructing a "camera coordinate system." Reference points on the B-pillar marked by the camera are acquired to construct a world coordinate system. A function is used to convert a disparity map and a depth map acquired by the camera into three-dimensional coordinates. Position feature points of the driver's eyes are obtained, and pixel coordinates of the position feature points of the eyes are mapped to the camera coordinate system. The pixel coordinates are then transformed to a position in the world coordinate system. After a front camera image is obtained, it is necessary to perform a deflection transformation on the camera image based on the sitting posture information of the driver calculated by the camera in the cockpit so that the image is transformed into an image based on the driver's perspective and finally presented in the MR device. To achieve the above function, homography matrix transformation can be used. The steps are as follows: a homography matrix of the driver's field of view is obtained through a known positional relationship between the front camera of the vehicle body and an in-cabin driver's face capture camera, and a calculated positional relationship between a driver's field of view reference and the in-cabin driver's face capture camera. The image converted by framing the driver's field of view, calculated via the in-cabin camera, may be displayed within an image range of the driver's field of view. Color and brightness values of various parts within the field of view are calculated in the image after the conversion. These values will be used to select safe and eye-catching interface colors during MR imaging.

In one implementation, an embodiment of the present disclosure provides a method for displaying in-vehicle information, including step S101 to step S105. The method further includes:
annotating and displaying in-vehicle information corresponding to color-blind display when a color-blind display instruction is received;
   and/or
performing, when it is determined that an ambient light in front of the vehicle undergoes a color change, color rendering adjustment on in-vehicle information having a color consistent with the color change and displaying the color rendering-adjusted in-vehicle information.

According to the embodiment of the present disclosure, it should be noted that:
The in-vehicle information corresponding to color-blind display may include at least traffic light information.

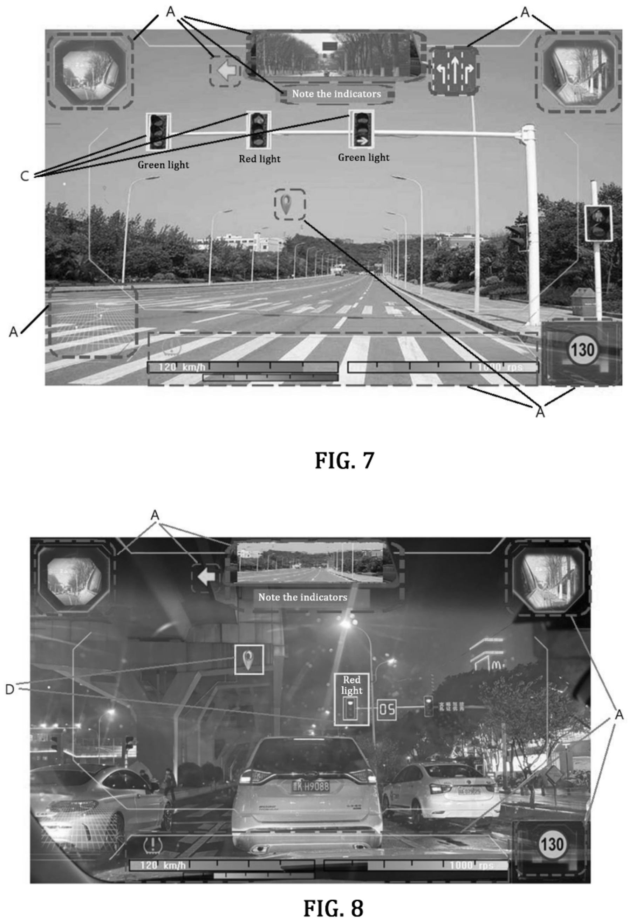

Annotating and displaying, as shown at the position indicated by C in FIG. 7, refers to performing text and/or graphic annotation on the traffic light, and mixing and superimposing the text and/or graphic annotations on the traffic light shown to the user on the mixed reality device.

The color rendering adjustment is performed on the in-vehicle information having a color consistent with the color change and the color rendering-adjusted in-vehicle information is displayed, as shown at the position indicated by D in FIG. 8. When the exterior background environment corresponding to the color position of the first information displayed by the mixed reality device is similar to the color of the icon, the color of the first information can be adaptively adjusted so that the user can distinguish the first information from the corresponding background environment on the mixed reality device.

The vehicle camera can capture images in front of the vehicle and identify traffic lights and color changes in ambient light.

According to the technology of the embodiment of the present disclosure, driving requirements of special users can be met, so that users can drive safely even if they are color blind, and relevant driving information can be clearly known, thereby assisting the users in driving safely.

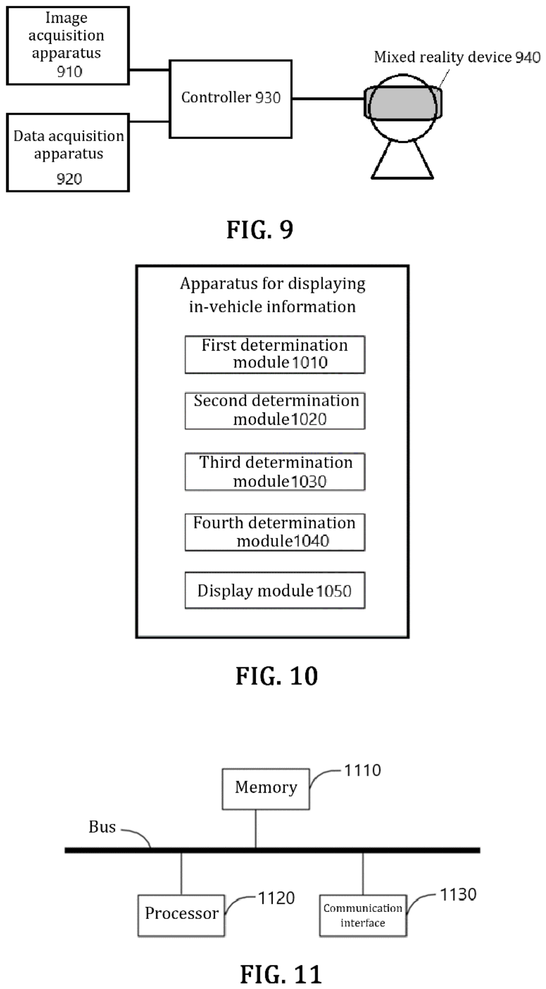

As shown in FIG. 9, an embodiment of the present disclosure provides a system for displaying in-vehicle information, including:
an image acquisition apparatus 910 configured to acquire environment information corresponding to a vehicle;
a data acquisition apparatus 920 configured to acquire vehicle information corresponding to the vehicle;
a controller 930 electrically connected to the image acquisition apparatus 910 and the data acquisition apparatus 920 and configured to perform the method according to any embodiment in the present disclosure; and and
a mixed reality device 940 electrically connected to the controller 930 and configured to display in-vehicle information of the vehicle.

According to the embodiment of the present disclosure, it should be noted that:
The image acquisition apparatus 910 may include at least one of an in-vehicle camera, an out-vehicle camera, or a vehicle-mounted sensor.

The data acquisition apparatus 920 may include an in-vehicle bus to obtain required vehicle information from other apparatuses in the vehicle.

The environment information may include: exterior environment information of the vehicle displayed by the exterior rearview mirrors and the interior rearview mirror and/or interior environment information of the vehicle.

The vehicle information may include: vehicle speed information, battery level information, fuel level information, navigation information (a navigation arrow and a destination buoy), road information, turn signal indicator information, and the like.

The controller 930 may be an electronic control unit (ECU), a microcontroller unit (MCU), or the like in the vehicle.

According to the technology of the embodiment of the present disclosure, the first information that the user is concerned about during driving (such as the exterior environment information, vehicle speed information, battery level information, fuel level information, navigation information, and road information) can always be displayed in front of the user. This eliminates the need for the user to turn his/her head or shift his/her gaze additionally to check the left rearview mirror or in-vehicle displays arranged at different positions, solving the problem of defocusing of the user's gaze and the driving risks caused by such gaze defocus, and improving the user's driving concentration and reaction time. At the same time, the mixed reality device has stronger human-computer interactivity and display customization, which can provide the vehicle user with more required personalized information, thereby improving user driving safety and user experience.

As shown in FIG. 10, an embodiment of the present disclosure provides an apparatus for displaying in-vehicle information, including:
a first determination module 1010 configured to determine, according to a state of a vehicle, first information that needs to be displayed on a mixed reality device worn by a user in the vehicle;
a second determination module 1020 configured to determine, according to the user's head posture and gaze, a target viewing zone that the user is gazing at in a field of view of the corresponding mixed reality device;
a third determination module 1030 configured to determine, according to the target viewing zone, second information that needs to be displayed on the mixed reality device;
a fourth determination module 1040 configured to determine a display method of the first information according to the target viewing zone; and
a display module 1050 configured to realize, according to the first information, the display method of the first information, and the second information, display of in-vehicle information of the vehicle on the mixed reality device.

In an implementation manner, the first determination module 1010 is configured to:
a first obtaining sub-module configured to obtain, according to the state of the vehicle, environment information corresponding to the vehicle based on an image acquisition device;
a second obtaining sub-module configured to obtain, according to the state, vehicle information corresponding to the vehicle based on a data acquisition device, where the vehicle information includes at least one of driving information, road information, navigation information, and multimedia information; and
a determination sub-module configured to determine the environment information and the vehicle information as the first information that needs to be displayed on the mixed reality device worn by the user in the vehicle.

In an implementation manner, the first obtaining sub-module is configured to:
obtain exterior environment information of the vehicle based on a first image acquisition device of the vehicle when it is determined that the vehicle is in a driving state.
   or
obtain interior environment information of the vehicle and exterior environment information of the vehicle based on a second image acquisition device of the vehicle when it is determined that the vehicle is in an activation state.

The exterior environment information includes at least one of front environment information, side-rear environment information, and rear environment information of the vehicle.

In an implementation manner, the third determination module 1030 is configured to:
generate warning information when it is determined that the target viewing zone is a monocular viewing zone outside a binocular viewing zone in the field of view, where the warning information is used to prompt the user to gaze at the binocular viewing zone, and the warning information includes text information and/or icon information; and
determine the warning information as the second information that needs to be displayed on the mixed reality device.

In an implementation manner, the fourth determination module 1040 is configured to:
determine, when it is determined that the target viewing zone is a peripheral viewing zone within a binocular viewing zone in the field of view, target information corresponding to the peripheral viewing zone, where the first information includes the target information, and the target information includes environment information displayed by an exterior rearview mirror on the same side as the peripheral viewing zone; and
determine the display method of the first information according to the peripheral viewing zone.

In an implementation manner, the display module 1050 is configured to:
determine, according to sitting posture information of the user, a field of view reference point of the mixed reality device corresponding to the user; and
realize, according to the first information, the display method of the first information, and the second information, display of in-vehicle information of the vehicle on the mixed reality device based on the field of view reference point.

In one implementation, the apparatus for displaying in-vehicle information according to an embodiment of the present disclosure further includes an adjustment module configured to:
annotate and display in-vehicle information corresponding to color-blind display when a color-blind display instruction is received;
   and/or
perform, when it is determined that an ambient light in front of the vehicle undergoes a color change, color rendering adjustment on in-vehicle information having a color consistent with the color change and displaying the color rendering-adjusted in-vehicle information.

For the description of specific functions and examples of various modules and submodules of the apparatus in the embodiment of the present disclosure, reference may be made to the relevant description of the corresponding steps in the above method embodiment, which will not be repeated here.

In the technical solutions of the present disclosure, the obtaining, storage, and application of user personal information involved comply with the provisions of relevant laws and regulations and do not violate public order and good morals.

FIG. 11 is a structural block diagram of an electronic device according to an embodiment of the present disclosure. As shown in FIG. 11, the electronic device includes a memory 1110 and a processor 1120. The memory 1110 stores a computer program that can be run on the processor 1120. There may be one or a plurality of memories 1110 and processors 1120. The memory 1110 may store one or a plurality of computer programs. When the one or a plurality of computer programs are executed by the electronic device, the electronic device is caused to perform the method provided by the above method embodiment. The electronic device may further include: a communication interface 1130 configured to communicate with external devices and perform data exchange transmission.

If the memory 1110, the processor 1120, and the communication interface 1130 are implemented independently, the memory 1110, the processor 1120, and the communication interface 1130 may be connected to each other via a bus and communicate with each other. The bus may be an industry standard architecture (ISA) bus, a peripheral component interconnect (PCI) bus, or an extended industry standard architecture (EISA) bus. The bus can be classified into an address bus, a data bus, a control bus, and the like. For ease of representation, FIG. 11 shows only one thick line, but this does not mean that there is only one bus or one type of bus.

Optionally, during specific implementation, if the memory 1110, the processor 1120, and the communication interface 1130 are integrated on the same chip, the memory 1110, the processor 1120, and the communication interface 1130 may communicate with each other through internal interfaces.

It should be understood that the above-mentioned processor can be a central processing unit (CPU), or another general-purpose processor, a digital signal processor (DSP), an application-specific integrated circuit (ASIC), a field programmable gate array (FPGA) or another programmable logic device, discrete gate or transistor logic device, discrete hardware components, or the like. The general-purpose processor may be a microprocessor or any regular processor or the like. It is worth noting that the processor may be a processor supporting advanced RISC machines (ARM) architecture.

Furthermore, optionally, the above-mentioned memory may include a read-only memory and a random access memory, and may also include a non-volatile random access memory. The memory may be a volatile memory or a nonvolatile memory, or may include both volatile and nonvolatile memories. The nonvolatile memory may include a read-only memory (ROM), a programmable ROM (PROM), an erasable PROM (EPROM), an electrically EPROM (EEPROM), or a flash memory. The volatile memory may include a random access memory (RAM), which acts as an external cache memory. By way of example and not limitation, many forms of RAM are available. For example, a static RAM (SRAM), a dynamic random access memory (DRAM), a synchronous DRAM (SDRAM), a double data rate SDRAM (DDR SDRAM), an enhanced SDRAM (ESDRAM), a synchlink DRAM (SLDRAM), and a direct RAMBUS RAM (DR RAM) are available.

In the above embodiments, all or part of them can be implemented by software, hardware, firmware, or any combination thereof. When implemented using software, all or part of the implementation may be in the form of a computer program product. The computer program product includes one or a plurality of computer instructions. When the computer instructions are loaded and executed on a computer, the processes or functions according to the embodiments of the present disclosure are generated in whole or in part. The computer may be a general-purpose computer, a special purpose computer, a computer network, or another programmable apparatus. The computer instructions may be stored in a computer-readable storage medium or transmitted from one computer-readable storage medium to another computer-readable storage medium. For example, the computer instructions can be transmitted from one website, computer, server, or data center to another website, computer, server, or data center in a wired (such as a coaxial cable, an optical fiber, and a digital subscriber line (DSL)) or wireless (such as infrared, Bluetooth, and microwave) manner. The computer-readable storage medium may be any available medium that is accessible by a computer, or a data storage device such as a server or data center that includes one or a plurality of available media. The available media may be magnetic media (such as floppy disks, hard disks, and magnetic tapes), optical media (such as digital versatile discs (DVDs)), or semiconductor media (such as solid state disks (SSDs)). It is worth noting that the computer-readable storage medium mentioned in the present disclosure may be a non-volatile storage medium, in other words, a non-transitory storage medium.

Those of ordinary skill in the art can understand that all or part of the steps for implementing the above embodiments may be accomplished by hardware, or by a program instructing the relevant hardware. The program may be stored in a computer-readable storage medium, and the storage medium mentioned above may be a read-only memory, a disk, an optical disk, or the like.

In the description of the embodiments of the present disclosure, the description with reference to terms such as "one embodiment", "some embodiments", "example", "specific example", or "some examples" means that the specific features, structures, materials, or characteristics described in combination with the embodiment or example are included in at least one embodiment or example of the present disclosure. Furthermore, the specific features, structures, materials, or characteristics may be combined in any suitable manner in one or more embodiments or examples. Moreover, in a case without mutual contradiction, persons skilled in the art can perform incorporation and combination on different embodiments or examples described in the specification with features of the different embodiments or examples.

In the description of the embodiments of the present disclosure, unless otherwise specified, "/" means or. For example, A/B can mean A or B. Herein, "and/or" is only a way of describing the association relationship of associated objects, indicating that there can be three relationships. For example, A and/or B can mean: A exists alone, A and B exist at the same time, and B exists alone.

In the description of the embodiments of the present disclosure, the terms "first" and "second" are used for descriptive purposes only and should not be understood as indicating or implying relative importance or implicitly indicating the number of the indicated technical features. Therefore, features defined as "first" or "second" may explicitly or implicitly include one or more of the features. In the description of the embodiments of the present disclosure, unless otherwise specified, "a plurality of" means two or more.

The above description is merely an exemplary embodiment of the present disclosure and is not intended to limit the present disclosure. Any modifications, equivalent substitutions, improvements, and the like made within the spirit and principles of the present disclosure shall be included in the scope of protection of the present disclosure.

## Claims

1. A method for displaying in-vehicle information, comprising:
determining, according to a state of a vehicle, first information that needs to be displayed on a mixed reality device worn by a user in the vehicle;
determining, according to the user's head posture and gaze, a target viewing zone that the user is gazing at in a field of view of the corresponding mixed reality device;
determining, according to the target viewing zone, second information that needs to be displayed on the mixed reality device;
determining a display method of the first information according to the target viewing zone; and
realizing, according to the first information, the display method of the first information, and the second information, display of in-vehicle information of the vehicle on the mixed reality device.

2. The method according to claim 1, wherein determining, according to the state of the vehicle, the first information that needs to be displayed on the mixed reality device worn by the user in the vehicle comprises:
obtaining, according to the state of the vehicle, environment information corresponding to the vehicle based on an image acquisition device;
obtaining, according to the state, vehicle information corresponding to the vehicle based on a data acquisition device, wherein the vehicle information comprises at least one of driving information, road information, navigation information, and multimedia information; and
determining the environment information and the vehicle information as the first information that needs to be displayed on the mixed reality device worn by the user in the vehicle.

3. The method according to claim 2, wherein obtaining, according to the state of the vehicle, the environment information corresponding to the vehicle based on the image acquisition device comprises:
obtaining exterior environment information of the vehicle based on a first image acquisition device of the vehicle when it is determined that the state of the vehicle is a driving state;
or
obtaining interior environment information of the vehicle and exterior environment information of the vehicle based on a second image acquisition device of the vehicle when it is determined that the state of the vehicle is an activation state;
wherein the exterior environment information comprises at least one of front environment information, side-rear environment information, and rear environment information of the vehicle.

4. The method according to claim 1, wherein determining, according to the target viewing zone, the second information that needs to be displayed on the mixed reality device comprises:
generating warning information when it is determined that the target viewing zone is a monocular viewing zone outside a binocular viewing zone in the field of view, wherein
the warning information is used to prompt the user to gaze at the binocular viewing zone, and the warning information comprises text information and/or icon information; and
determining the warning information as the second information that needs to be displayed on the mixed reality device.

5. The method according to claim 1, wherein determining, according to the target viewing zone, the display method of the first information comprises:
determining, when it is determined that the target viewing zone is a peripheral viewing zone within a binocular viewing zone in the field of view, target information corresponding to the peripheral viewing zone, wherein the first information comprises the target information, and the target information comprises environment information displayed by an exterior rearview mirror on the same side as the peripheral viewing zone; and
determining the display method of the first information according to the peripheral viewing zone.

6. The method according to any one of claims 1 to 5, wherein realizing, according to the first information, the display method of the first information, and the second information, the display of the in-vehicle information of the vehicle on the mixed reality device comprises:
determining, according to sitting posture information of the user, a field of view reference point of the mixed reality device corresponding to the user; and
realizing, according to the first information, the display method of the first information, and the second information, the display of the in-vehicle information of the vehicle on the mixed reality device based on the field of view reference point.

7. The method according to any one of claims 1 to 5, wherein after realizing, according to the first information, the display method of the first information, and the second information, the display of the in-vehicle information of the vehicle on the mixed reality device, the method further comprises:
annotating and displaying in-vehicle information corresponding to color-blind display when a color-blind display instruction is received;
and/or
performing, when it is determined that an ambient light in front of the vehicle undergoes a color change, color rendering adjustment on in-vehicle information having a color consistent with the color change and displaying the color rendering-adjusted in-vehicle information.

8. A system for displaying in-vehicle information, comprising:
an image acquisition apparatus configured to acquire environment information corresponding to a vehicle;
a data acquisition apparatus configured to acquire vehicle information corresponding to the vehicle;
a controller electrically connected to the image acquisition apparatus and the data acquisition apparatus and configured to perform the method according to any one of claims 1 to 7; and
a mixed reality device electrically connected to the controller and configured to display in-vehicle information of the vehicle.

9. An apparatus for displaying in-vehicle information, comprising:
a first determination module configured to determine, according to a state of a vehicle, first information that needs to be displayed on a mixed reality device worn by a user in the vehicle;
a second determination module configured to determine, according to the user's head posture and gaze, a target viewing zone that the user is gazing at in a field of view of the corresponding mixed reality device;
a third determination module configured to determine, according to the target viewing zone, second information that needs to be displayed on the mixed reality device;
a fourth determination module configured to determine a display method of the first information according to the target viewing zone; and
a display module configured to realize, according to the first information, the display method of the first information, and the second information, display of in-vehicle information of the vehicle on the mixed reality device.

10. An electronic device, comprising:
at least one processor; and
a memory communicatively connected to the at least one processor; wherein,
the memory stores instructions executable by the at least one processor, and the instructions, when executed by the at least one processor, enable the at least one processor to perform the method according to any one of claims 1 to 7.

11. A non-transitory computer-readable storage medium storing computer instructions, wherein the computer instructions are used to cause the computer to perform the method according to any one of claims 1 to 7.

12. A computer program product comprising a computer program, wherein the computer program, when executed by a processor, implements the method according to any one of claims 1 to 7.
